# EUROPEAN PATENT SPECIFICATION

(11) **EP 0 780 054 B1**
(45) Date of publication and mention of the grant of the patent: **12.11.2003**
(21) Application number: 96309417.2
(22) Date of filing: 23.12.1996
(51) Int. Cl.: A23D 9/00, A23D 7/00, A21D 8/08, A23L 1/24

(54) **Dispensing of edible products**
Ausgabe von Lebensmittelprodukten
Distribution de produits alimentaires

(30) Priority: 22.12.1995 GB 9526397
(43) Date of publication of application: 25.06.1997
(73) Proprietor: St. Giles Foods Limited, Erith, Kent, DA8 2JA (GB)
(72) Inventor: Mussawir-Key, Frederick Wade, St. Giles Foods Ltd., Erith, Kent, DA8 2JA (GB)
(74) Representative: Womsley, Nicholas

(56) References cited:
- WO-A-93/06749
- WO-A-95/05748
- WO-A-95/25434
- FR-A- 2 725 455
- GB-A- 2 002 806
- US-A- 4 163 676

## Description

This invention relates to the dispensing of edible products such as foodstuffs, cooking products and the like.

The calorie content of foodstuffs and products used in their cooking is an important element in dieting. Many diets require control of calorie intake and while this can be readily determined for measured quantities of specific food products, it can be materially affected by addition of calories derived from oils or the like in which food is cooked or from salad dressings or the like added before the food is consumed. It has been proposed to provide cooking oils in spray dispensers but this produces problems due to the relatively thick oily nature of cooking oils and in addition the calorie content of such products introduced by spraying cannot be readily determined. The term "calorie" is used herein in the manner usual in the food industry to refer to a unit of one kilocalorie.

A dispensing system for a composition comprising vegetable oil, lecithin and ethyl alcohol is disclosed in GB 2 002 806. A water-in-oil emulsion composition for the prevention of the sticking of foodstuffs to cooking utensils is known from WO 95/25434.

According to one aspect of the present invention there is provided a dispensing container containing a bulk supply of liquid edible product consisting of a water-in-oil emulsion, characterised in that the dispensing container incorporates a spray dispensing mechanism enabling a fixed volume of the liquid edible product to be dispensed from the container as a spray with each actuation of the mechanism, the constituents of the liquid edible product being related to the operation of the dispensing mechanism in such manner that the fixed volume of liquid product dispensed on each actuation of the dispensing mechanism comprises a fixed and known number of calories.

Preferably the container is adapted to dispense a quantity of the product containing one calorie on each actuation of the dispensing mechanism.

The dispensing mechanism is preferably a non-aerosol pump-operated mechanism.

The invention also provides a method of dispensing a liquid edible product consisting of a water-in-oil emulsion of sprayable viscosity from a spray dispensing container characterised in that each dispensing operation is arranged to spray a fixed volume of the liquid edible product containing a fixed and known number of calories.

The product may comprise a non-stick cooking composition, a salad dressing, a flavouring or other product.

A preferred cooking composition comprises a water-in-oil emulsion incorporating an edible oil, a non-stick agent and water.

In the case of a cooking oil, the composition preferably comprises 40-60% by weight of edible oil, 5-10% by weight of non-stick agent and 30-55% by weight of water mixed together to form an emulsion of sprayable viscosity. Preferably the non-stick agent is lecithin.

Advantageously the composition also includes a preservative, flavouring and/or colouring. Suitable preservatives include grain alcohol or iso-propyl alcohol. The preservative may be present in an amount of up to 10% and preferably about 5% by volume of the composition.

The composition is arranged to be dispensed from a non-aerosol container incorporating a spray nozzle adapted on each operation to dispense a known volume of the product. The composition of the product is adjusted in relation to the volume dispensed at each actuation of the mechanism in such a way that the calorie content of the dispensed volume is known and is preferably one calorie.

In the case of a dispenser delivering 0.2ml at each operation, the composition of the cooking oil product may advantageously comprise:-

| | %wt. |
|---|---|
| vegetable oil | 45 |
| purified soya lecithin | 5 |
| water | 44 |
| grain alcohol (preservative) | 5 |
| flavouring and colouring | 1 |

The product may be used as a quick release coating or as a shallow fry cooking oil. The lecithin imparts the necessary non-stick properties to the product and the water controls viscosity so as to render the product suitable for spray dispensing. The oil content is selected relative to the other ingredients such that 0.2ml of the composition contains one calorie. The user can thus control precisely the additional calories introduced by use of the cooking oil product by counting the number of operations of the dispenser, thereby enabling both rapid dispensing of the product and precise control of the number of calories contained in the dispensed quantity.

The dispensing mechanism preferably comprises a finger operated pump mechanism operable to dispense a fixed volume of the contents of the container at each operation. In a typical example the container has a volume of 250ml and dispenses 0.2ml at each operation. The dispensing mechanism is preferably arranged to produce a cone-shaped spray formation comprising a mist of small particles up to about 0.3gm in weight.

Various modifications may be made without departing from the invention. For example the container may be arranged to dispense any desired number of calories of product by appropriate control of the volume dispensed and the proportions of constituents incorporated in the formulation. In general however it will be preferred to dispense one calorie at each operation of the dispensing mechanism as this contributes to ease of operation since the number of actuation's of the dispenser is equal to the number of calories in the dispensed product.

The composition of the cooking product may also be varied. For example, alternative vegetable-based or synthetic oils may be employed and modified lecithin's or other non-stick agents may be incorporated. While the invention has been described primarily with reference to dispensing of cooking oils, it may equally be applied to dispensing of salad dressings or other food products by calorie content rather than by time or volume. Moreover while reference has been made herein to non-aerosol dispensing mechanisms, the dispensing mechanism may alternatively be an aerosol dispenser.

## Claims

1. A dispensing container containing a bulk supply of liquid edible product consisting of a water-in-oil emulsion, **characterised in that** the dispensing container incorporates a spray dispensing mechanism enabling a fixed volume of the liquid edible product to be dispensed from the container as a spray with each actuation of the mechanism, the constituents of the liquid edible product being related to the operation of the dispensing mechanism in such manner that the fixed volume of liquid product dispensed on each actuation of the dispensing mechanism comprises a fixed and known number of calories.

2. A container according to claim 1 **characterised in that** it is adapted to dispense a quantity of the product containing one calorie on each actuation of the dispensing mechanism.

3. A container according to claim 1 or 2 **characterised in that** the product incorporating 40-70% by weight of an edible oil, 5-10% by weight of a non-stick agent and 30-55% by weight of water, the product being of sprayable viscosity.

4. A container according to claim 3 **characterised in that** the product comprises a cooking oil.

5. A container according to claim 3 **characterised in that** the product comprises a salad dressing.

6. A container according to any of claims 3 to 5 **characterised in that** said non-stick agent is lecithin.

7. A container according to any of claims 3 to 6 **characterised in that** the product includes a preservative.

8. A container according to claim 7 **characterised in that** said preservative is present in an amount up to 10% by volume of the product.

9. A container according to claim 8 **characterised in that** said preservative is present in an amount of about 5% by volume of the product.

10. A container according to any of claims 7 to 9 **characterised in that** said preservative is selected from grain alcohol and isopropyl alcohol.

11. A method of dispensing a liquid edible product consisting of a water-in-oil emulsion of sprayable viscosity from a spray dispensing container **characterised in that** each dispensing operation is arranged to spray a fixed volume of the liquid edible product containing a fixed and known number of calories.

12. A method according to claim 11 **characterised in that** each dispensing operation is arranged to deliver a quantity of the product containing one calorie.

13. A method according to any of claims 11 to 12 **characterised in that** the product and container are as defined in any of claims 3 to 10.

## Patentansprüche

1. Abgabebehälter, der einen Volumenvorrat eines flüssigen essbaren Produktes enthält, das aus einer Wasser-in-Öl-Emulsion besteht, **dadurch gekennzeichnet, dass** der Abgabebehälter einen Sprüh-Abgabemechanismus enthält, der bei jeder Betätigung des Mechanismus die Abgabe eines festgelegten Volumens des flüssigen essbaren Produktes aus dem Behälter in gesprühter Form ermöglicht, wobei die Bestandteile des flüssigen essbaren Produktes mit dem Betrieb des Abgabemechanismus derart in Beziehung stehen, dass das bei jeder Betätigung des Abgabemechanismus abgegebene festgelegte Volumen des flüssigen Produktes eine festgelegte und bekannte Anzahl an Kalorien aufweist.

2. Behälter nach Anspruch 1, **dadurch gekennzeichnet, dass** er dafür ausgelegt ist, um bei jeder Betätigung des Abgabemechanismus eine Menge des Produktes abzugeben, die eine Kalorie enthält.

3. Behälter nach Anspruch 1 oder 2, **dadurch gekennzeichnet, dass** das Produkt 40 bis 70 Gew% eines essbaren Öls, 5 bis 10 Gew% eines nicht-klebrigen Mittels und 30 bis 55 Gew% Wasser enthält, wobei das Produkt eine sprühbare Viskosität hat.

4. Behälter nach Anspruch 3, **dadurch gekennzeichnet, dass** das Produkt ein Speiseöl bzw. Kochöl aufweist.

5. Behälter nach Anspruch 3, **dadurch gekennzeichnet, dass** das Produkt eine Salatsauce aufweist.

6. Behälter nach einem der Ansprüche 3 bis 5, **dadurch gekennzeichnet, dass** das nicht-klebrige Mittel Lecithin ist.

7. Behälter nach einem der Ansprüche 3 bis 6, **dadurch gekennzeichnet, dass** das Produkt ein Konservierungsmittel enthält.

8. Behälter nach Anspruch 7, **dadurch gekennzeichnet, dass** das Konservierungsmittel in einer Menge von bis zu 10 Vol% des Produktes vorliegt.

9. Behälter nach Anspruch 8, **dadurch gekennzeichnet, dass** das Konservierungsmittel in einer Menge von etwa 5 Vol% des Produktes vorliegt.

10. Behälter nach einem der Ansprüche 7 bis 9, **dadurch gekennzeichnet, dass** das Konservierungsmittel aus Getreide-Alkohol und Isopropyl-Alkohol ausgewählt ist.

11. Verfahren zum Abgeben eines flüssigen essbaren Produktes, das aus einer Wasser-in-Öl-Emulsion mit sprühbarer Viskosität besteht, von einem Sprühabgabe-Behälter, **dadurch gekennzeichnet, dass** jeder Abgabevorgang so ausgelegt ist, dass ein festgelegtes Volumen des flüssigen essbaren Produktes versprüht wird, das eine festgelegte und bekannte Anzahl an Kalorien hat.

12. Verfahren nach Anspruch 11, **dadurch gekennzeichnet, dass** jeder Abgabevorgang so ausgelegt ist, dass er eine Menge des Produktes liefert, die eine Kalorie enthält.

13. Verfahren nach einem der Ansprüche 11 bis 12, **dadurch gekennzeichnet, dass** das Produkt und der Behälter so sind, wie sie in einem der Ansprüche 3 bis 10 definiert sind.

## Revendications

1. Récipient distributeur contenant une quantité en vrac de produit comestible liquide constitué par une émulsion d'eau dans l'huile, **caractérisé en ce que** le récipient distributeur comprend un mécanisme distributeur pulvérisateur qui permet à un volume fixe du produit comestible liquide d'être distribué à partir du récipient sous la forme d'un jet pulvérisé à chaque actionnement du mécanisme, les constituants du produit comestible liquide étant liés au fonctionnement du mécanisme distributeur de manière que le volume fixe de produit liquide distribué à chaque actionnement du mécanisme distributeur contient un nombre de calories fixe et connu.

2. Récipient selon la revendication 1, **caractérisé en ce qu'**il est adapté pour distribuer une quantité du produit qui contient une calorie à chaque actionnement du mécanisme distributeur.

3. Récipient selon la revendication 1 ou 2, **caractérisé en ce que** le produit contient 40-70% en poids d'une huile comestible, 5-10% en poids d'un agent anti-adhésif et 30-55% en poids d'eau, le produit étant d'une viscosité permettant la pulvérisation.

4. Récipient selon la revendication 3, **caractérisé en ce que** le produit comprend une huile de cuisson.

5. Récipient selon la revendication 3, **caractérisé en ce que** le produit comprend un condiment pour salade.

6. Récipient selon une quelconque des revendications 3 à 5, **caractérisé en ce que** l'agent anti-adhésif est la lécithine.

7. Récipient selon une quelconque des revendications 3 à 6, **caractérisé en ce que** le produit contient un conservateur.

8. Récipient selon la revendication 7, **caractérisé en ce que** ledit conservateur est présent en une quantité pouvant atteindre 10% en volume du produit.

9. Récipient selon la revendication 8, **caractérisé en ce que** ledit conservateur est présent en une quantité d'environ 5% en volume du produit.

10. Récipient selon une quelconque des revendications 7 à 9, **caractérisé en ce que** ledit conservateur est choisi entre un alcool de grain et l'alcool isopropylique.

11. Procédé de distribution d'un produit comestible liquide constitué par une émulsion d'eau dans l'huile, possédant une viscosité permettant la pulvérisation, à partir d'un récipient distributeur à jet pulvérisé, **caractérisé en ce que** chaque manoeuvre de distribution est adaptée pour pulvériser un volume fixe du produit comestible liquide qui contient un nombre de calories fixe et connu.

12. Procédé selon la revendication 11, **caractérisé en ce que** chaque manoeuvre de distribution est adaptée pour délivrer une quantité du produit qui contient une calorie.

13. Procédé selon une quelconque des revendications 11 à 12, **caractérisé en ce que** le produit et le récipient sont tels que définis dans une quelconque des revendications 3 à 10.
